# EUROPEAN PATENT APPLICATION

(11) **EP 2 479 966 A1**
(43) Date of publication of application: **25.07.2012**
(21) Application number: 12151729.6
(22) Date of filing: 19.01.2012
(51) Int. Cl.: H04M 1/725, H04M 3/42

(54) **identifying personal context by correlating the output of multiple sensors**

(30) Priority: 19.01.2011 ES 201130054
(71) Applicant: Vodafone Group PLC, Newbury Berkshire RG14 2FN (GB); Vodafone España, S.A.U., 28108 Alcobendas (ES)
(72) Inventor: Rubio Andres, Francisco, E-28050 Madrid (ES); Esteve Asensio, Guillermo, E-28050 Madrid (ES); Almodovar Herraiz, Daniel, E-28050 Madrid (ES)
(74) Representative: Ellis, Lyle John

(57) **Abstract**

A proposal for identifying a context of a person in a telecommunication network is disclosed. By means of obtaining available physical variables of an environment, it is possible to establish a plurality of determinable contexts. Thus, for each determinable context, contextual conditions can be evaluated in order to assign a degree of contextual matching to each determinable context. This is used to make a selection of an active context and to communicate the active context of the person with a telecommunication network entity. The physical variables are retrieved by means of a plurality of distributed sensors, and optionally, from the telecommunication network.

## Description

### Field of the Invention

The present invention is comprised within the field of telecommunication and deals with user context information of a user or a group of users. It addresses how context information is obtained and shared in order to allow user applications to interact.

### Background of the Invention

According to the present invention, the personal context is construed as a specific situation of a user. In particular, it may relate to a mobility status derived from the mode of transportation (by car, by plane, by train, by bicycle) and it may relate to the surroundings of the user (like beach, cinema, discotheque, etc.). The concept can be extended to groups of users (e.g. in a concert, in a football match, etc.)

There are several known approaches to the provision of context information of users of a telecommunication network.

"Ubiquitous Mobile Awareness from Sensor Networks" (T. Kanter et al., Mobilware 2009 Workshops, LNICST 12, pp. 147-150) discloses architecture for sharing context information gathered from local and remote sensors. The architecture makes use of GPRS or 3G networks to access the Internet via IMS and via P2P infrastructure. A sensor network is built with the information gathered from local and remote sensors. This document is focused on an architecture for sharing contexts of members but is silent on defining the mechanism for context identification with the information from said sensors.

By contrast, "A time to glance: Studying the use of mobile ambient information" (F. Bentley et al., Pervasive '07 Workshop: W9 - Ambient Information Systems May 13, 2007; Toronto, Ontario, Canada) shows the results of a research based on communication of ambient information among users. The study was focused on how such information is handled by people and under what circumstances. In particular, two applications, Music Presence and Motion Presence were tested in a group of users in order to evaluate the key factors relating to their general use.

A service provided by Google, called Google Latitude, that relates to a location-based social network, offers sharing and alerting a user's location amongst a group of users.

Many of the known approaches require human interaction; the user consciously changes the status that represents his context information. Usually, this status is selected from a set of possible status (free, busy, disconnected, etc.). More advanced solutions detect lack of user interaction in order to automatically change the status from connected to disconnected and vice versa.

On the other hand, devices capable of automatically detecting the context are based on connection with a satellite navigation system (e.g. GPS). Google Latitude is one such service and permits users to see the approximate location of friends who opt to share their location.

One drawback of such systems is the requirement for the provision of additional electronic components. Battery consumption is also affected by usage of receivers of satellite navigation system.

In addition to said drawbacks, a satellite navigation system does not provide information in the Z-axis (i.e. altitude). That is to say, it is focused on two dimensions over the X-Y plane.

Similar drawbacks exist should a system of short range wireless (e.g. Bluetooth) beacons be adopted as an alternative to satellite positioning. Again additional equipment may be required (e,g, a radio sensor) and battery consumption will also be affected.

Satellite positioning systems do not operate effectively indoors. Since a GPS receiver lacks the sensitivity to operate at very low signal/noise ratio, it typically lacks connectivity inside buildings. This fact means GPS is inadequate in distinguishing between many common personal contexts.

In addition to coverage, a further disadvantage of the civil GPS based devices has been the limited accuracy delivered to civilian equipment by the nominally military GPS signalling: typical positioning accuracy is in the order of tens of metres. Even with enhanced techniques (such as combining GPS with Cell ID information) such accuracy is not below meters.

It would thus be desirable to provide a system that overcomes the above drawbacks.

### Description of the Invention

The invention also addresses the task of retrieving information from a plurality of distributed sensors, and optionally, from the telecommunication network. From this information, the invention is able to infer which of a plurality of personal contexts best characterises a user. The sensors may be wearable or external ones.

In accordance with one aspect of the invention, there is provided a method for identifying a context of a person in a telecommunication network comprising the steps of:
- periodically collecting environment information comprising measured values of physical variables related to an environment of the person;
- establishing a plurality of determinable contexts by checking presence of a subset of measured values of physical variables for determining each context;
- evaluating, for each determinable context, a plurality of contextual conditions, each contextual condition based on a comparison of at least one measured value of a physical variable with an expected value of said physical variable for said context; and
- assigning a degree of contextual matching to each determinable context based on the evaluated contextual conditions;
- selecting, among the determinable contexts, an active context of the person based on the degree of contextual matching; and
- communicating the active context of the person with a telecommunication network entity.

In accordance with a further aspect of the invention, there is provided a system for identifying a context of a person in a telecommunication network, the system comprises:
- a storage module configured to store environment information comprising measured values of physical variables and expected values of each physical variables for each context;
- a processing module configured to establish a plurality of determinable contexts by accessing to the storage module and checking presence of a subset of measured values of physical variables for determining each context; the processing module further configured to evaluate, for each determinable context, a plurality of contextual conditions, each contextual condition based on a comparison of at least one measured value of a physical variable with an expected value of said physical variable for said context and to assign a degree of contextual matching to each determinable context based on the evaluated context conditions; the processing module further configured to select, among the determinable contexts, an active context of the person based on the assigned degree of context matching; and
- a communication module coupled with the processing module and configured to transmit the active context of the person with a telecommunication network entity and to receive a notification from the entity network based on said active context.

The system therefore collects sensor information in real time, without active user participation and what is more without being intrusive, in order to determine the context of a user in a particular moment. Furthermore, gathering and processing individual context information of several users may serve to identify certain events.

In addition, the invention facilitates the implementation of sensors that save battery consumption in contrast to satellite navigation receivers and other type of sensors.

### Brief Description of the Drawings

A series of drawings that aid in better understanding the invention and which are expressly related with an embodiment of said invention, presented as a non-limiting example thereof, are briefly described below.

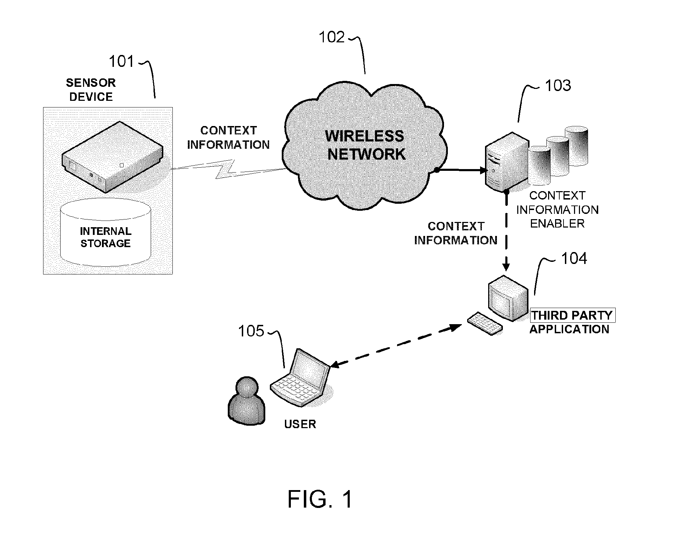

FIG. 1 illustrates some key elements in a network architecture comprising a wireless network (102) used by system (101) according to the present invention. The collected data concerning a person context is transmitted to a server (103) as context information enabler through the wireless network (102) and processed therein prior to be utilised by third party applications (104) and other users (105).

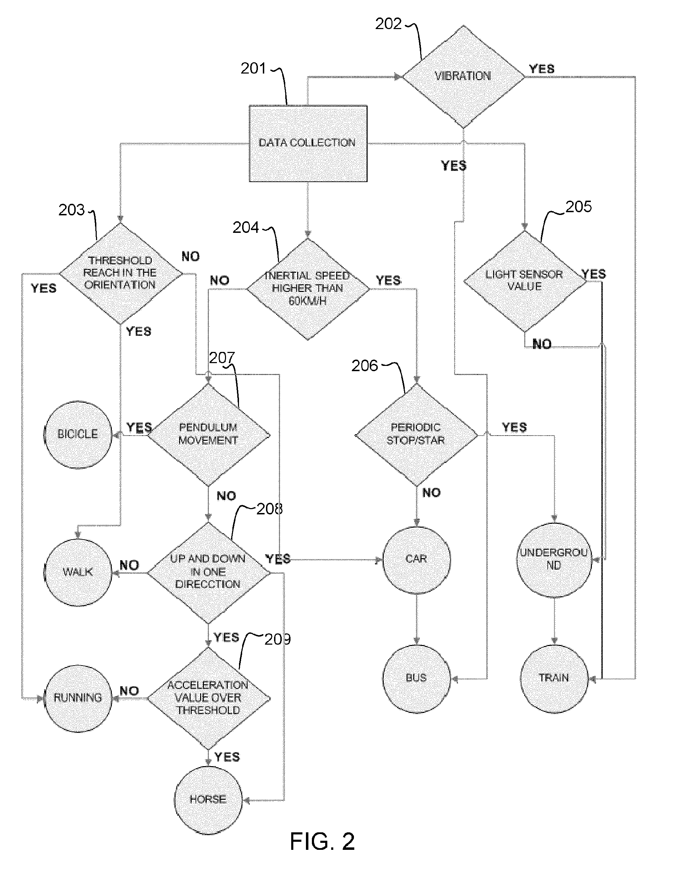

FIG. 2 shows a flow chart illustrating particular contextual conditions (403) evaluated by means of comparisons of physical variables (201-209) to identify several mobility contexts in view of the environment information, in this case the environment information is provided by an accelerometer and by an orientation sensor. By using additional sensors, such as a light sensor, more specific contexts can be identified.

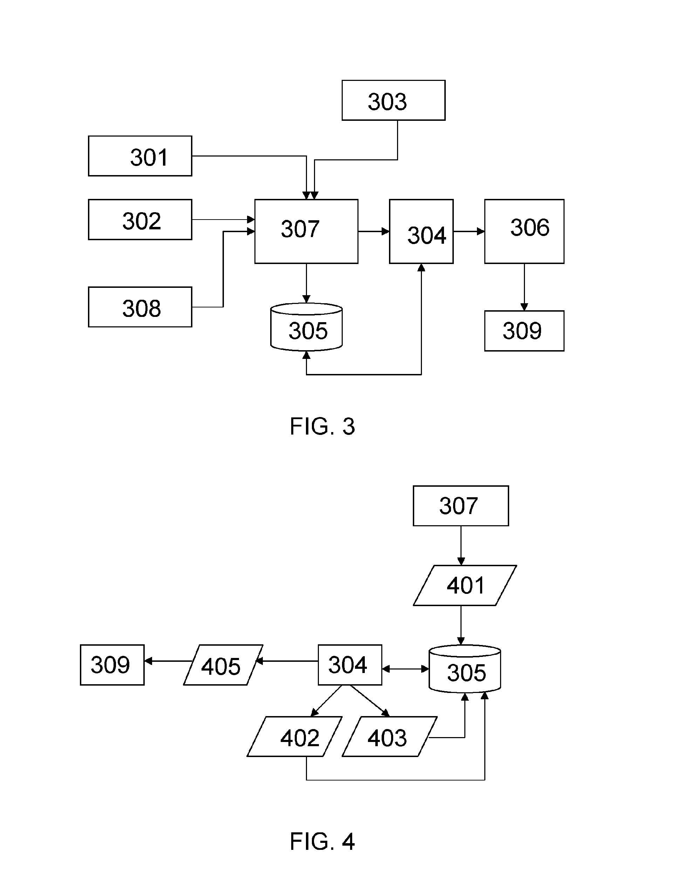

FIG. 3 is a block diagram of an embodiment of the present invention that shows a processing module (304) for processing the data collected by a sensor interface (307) coupled with an accelerometer (101), an orientation sensor (302) and optionally by other specific sensors (303). The said data is stored in a database (305) in order to be processed by the processing module (304). After being processed, it may be used to be transmitted by a communication module (306) to a telecommunication entity (309).

FIG. 4 shows generation of environment information (401) in a collecting module (307) and stored in a storage module (305) to be processed by a processing module (304) in order to produce data relating to a subset of contexts (402) and a degree of contextual matching (404). The subset of contexts (402) are those contexts that can be determined according to the collected information (401). Whereas the degree of contextual matching (404) refers to a level of correspondence with a particular context.

Thus, after additional processing an active context (405) is selected.

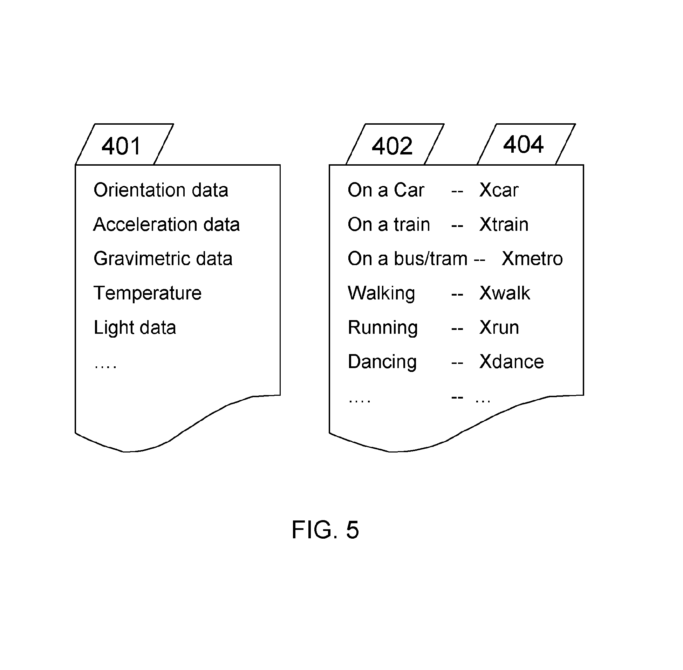

FIG. 5 shows examples of physical variables gathered from an environment in order to determine a plurality of determinable contexts (402) along with its corresponding value as a degree of matching (404),

### Description of a Preferred Embodiment of the Invention

The table below sets out several individual contexts and the related sensors that may be needed for their identification.

### Context and sensor table:

| INDIVIDUAL CONTEXT | SENSORS |
|---|---|
| Walking | Accelerometer, Orientation, Gravitational |
| Running | Accelerometer, Orientation, Gravitational |
| Cycling | Accelerometer, Orientation, Gravitational |
| Riding | Accelerometer, Orientation, Gravitational |
| Resting | Accelerometer, Orientation, Light |
| Sleeping | Accelerometer, Orientation, Light, Sound |
| Dancing | Accelerometer, Orientation, Light |
| In a car | Accelerometer, Orientation, Gravitational |
| In a bus | Accelerometer, Orientation, Gravitational |
| In the train | Accelerometer, Orientation, Light, Gravitational |
| In the underground | Accelerometer, Orientation, Light, Gravitational |
| In a crowded party | Accelerometer, Orientation, Light, Sound |
| In the beach | Accelerometer, Orientation, Light, Humidity, Temperature |
| In the cinema | Accelerometer, Orientation, Light, Sound |

In order to establish suitable determinable contexts, a table of this kind is populated with the data from sensors in order to identify a suitable context. After processing this table, an additional column regarding the probability associated with each context is added.

To illustrate this process, the inference of two contexts is explained in more detail below:
1 - In a car

The algorithm checks different physical parameters and their values and provides a subset of determinable contexts; a filter algorithm will provide the feasible context available (by assigning a probability to each determinable context in order to estimate how measured values match a candidate context). When the feasible context is unique or the most probable context on a predetermined number "n" of occasions, that context will be chosen as the active one.

In this regard, a gravimetric sensor, which collects terrestrial gravitational data may offer additional relevant information assisting to differentiate possible contexts.

In a car, the accelerometers and orientation sensors provide information about the inertial speed. The acceleration in three mutually orthogonal axes and the orientation in those three axes are stored in a database (305), the processor calculates the inertial speed and stores the results also in the database (305). All these data are periodically checked by a processing module (304). The processing module (304) analyses the contextual conditions as illustrated by the figure 2 (vibration, inertial speed, light threshold, semi-periodic start/stop... etc), when a sufficient number of conditions are satisfied, the context can be deduced and stored as active in a database (305) (can be external or internal storage) or use a communication module (306) to send it . The number of conditions needed for making a decision can be established by experimentation (i.e. empirically) when there are no suitable theoretical models.

The inertial acceleration provided by the accelerometer will offer a subset of possible contexts: in this case, riding, cycling, bus, train and underground. Riding and cycling are easily filtered using the pendulum movement of one of the accelerometer axes for the cycling and the up and down variations in the acceleration axes for the riding, additionally the orientation sensor will provide larger variations for these contexts than "in car" context.

The discrimination of the "in train" and "on underground" requires more time to differentiate smaller acceleration and the periodic or intermittent start and stop behaviour using similar inertial acceleration values analysed during intervals of time.

Discrimination from the "on a bus" context is perhaps the most challenging as it requires the recognition of the larger inertia characteristic of the bus in the stops and starts in comparison with the car. Light sensor can be useful to filter a underground context.

### 2 - Dancing

In this case the fast changes in the accelerometer will provide different context possibilities, running, walking and dancing. The dancing is detected by means of the more chaotic accelerometer changes; the running and walking has a very constant variation in the axis perpendicular to the floor. Additionally a measurement of the sound can help to a faster filter of the dancing context, dancers usually prefer a higher volume that the others activities. Dancing with high noise and low light means that you are in a pub or disco. In general, each determinable context has an associated probability according to the degree of matching between measured value and the expected value according to the definition of said context.

It is noted that, selecting one general context of the person as active can help in the search of additional contexts (compatible with the general active context identified).

The contexts can be upgraded by using cell information from the communication module (306). Said cell information required to communicate with a mobile network allowing to geometrical allocation.

For instance, other users can be informed about places where there are many people in a dancing context. This may serve to choose a place to go dancing.

Additional sensors (sound, light, humidity, temperature, air pressure, UV radiation, chemical or particulate detection, etc) may be used to assist in determining more contexts and many of these are shown on the table. Likewise more sensors may be used to better identify specific contexts. Certain embodiments of the invention may address medical or sports applications - in such circumstances, connection to body temperature and/or heart function sensors may be advantageous: personal contexts that might otherwise be interpreted incorrectly may be better recognised.

The above cases are examples of how two different situations may be modelled in order to identify a pattern in the data collected and processed and to associate said pattern to a context. It is to be appreciated that information from more than one user may be managed and be extended to group of users. A search for specific patterns in data retrieved by device sensors regarding a plurality of users may be used to that end. The active context and corresponding environment information of a group of persons may be used to extend individual context of persons to a common context for a group of users.

For instance, an earthquake is associated to simultaneous movement detected by devices of a plurality of users. In this regard, other examples, where this type of alerting service is useful can be easily conceived. If an emergency arises, gathering such information may be helpful to authorities, since the information also may include the location of persons according to the assigned cell in a mobile telecommunication network.

A further application is within the field of statistics. The information obtained from sensors of a group of users in a place (for instance, a concert, a sport match, etc) may serve as samples to apply statistical analysis.

Again, reference is made to figures 3 to 5 as an illustrative embodiment, to better explain the invention.

Environment information (401), mainly relating to values from sensors (301,302,303,...) are collected by a collecting module (307). Said values are schematically represented in figure 5, they may be in the form of a position inside an array of data (e.g. [34 4 0 55]) or as a header associated to this data (e.g. light 34; accelX 4; accelY 0;:accelZ 55). In any case, these are managed by an application running in the collecting module (307). Then, a processor module (304) and a storage module (305) can operate with them. More in particular, since the sensors (301,302,303,308) can not only be local but remote ones. The way to assign a remote sensor to a user can be carried out via a specific user gateway.

As previously explained, the value and its associated physical parameter are identified and stored in the storage module (305) regarding environment information. Another thread in the application running in the processor module (304) checks the latest values of acceleration and orientation and variations thereof. Hence, it is possible to work with such information (401) and to obtain true or false in some conditions (201-209) previously defined (vibration, inertial speed higher than..., light value higher than..., pendulum movement detected, up and down detected...). When no true/false can be established, a probability is defined instead.

Once a value is obtained information is produced which can be sent to another thread (this can be a thread already running in the memory (305), in the the processor (304) or a new one). This thread checks all the values available and filter possible contexts (402) and its probability (404) according to how such data match expected data for the context. Such data can be stored in the database (305) or sent to a remote server (306).

In this regard, a subscription to a notification service having a context based application can be developed and offered to users. When the person has an associated context, a notification can be generated based on his interests and customised according to his particular context. For instance, alerts or advertisements can be sent to a person by a remote server (306) or through another network entity (103,104,105) aware of his current context. Therefore notifications received by users can be highly personalised.

The user gateway previously referred to is in charge of associating remote sensors to a given user. By activating a mobile phone as gateway, external Bluetooth sensors can be searched. An IEEE 802.15.4 board associated with 6LoWPAN (IPv6 over Low power Wireless Personal Area Networks) or Zigbee user's information can be updated and conveyed to a context enabler. However, the specific features of this gateway will not be addressed herein.

In general, data from the sensors (also from a network entity) are collected as a environment information (401). These data relate to physical variables values in connection with the surroundings of the person at a given moment.

The environment information (401) is processed based on contextual conditions. Such conditions relate to comparisons and requirements to be satisfied according to each context. Particularly, it may be in the format of a truth table allowing parallel processing.

Accordingly, a subset of candidate contexts is prepared (402). Accompanying each determinable context (402), an associated degree of correspondence (404) with the selected context is estimated.

The subset of determinable contexts (402) may be further processed and checked in order to confirm they are also compatible with other contextual conditions previously evaluated. Finally, a context among them is set as the active context (405) of the person.

Once the active context is chosen, subsequent data (401) are timely handled taking into account whether they relate to the prior context. To the extent that said data are not related to the prior context and not sufficient to determine any other possible contexts, such data are disregarded. Thus, contexts that require verification based on data of unavailable sensors are excluded.

This may be further illustrated as follows. When there are not available information regarding smoke or noise presence, the discotheque context cannot be verified (due to uncomplete information to determine it). However, most of the transportation modes may be checked, provided that the accelerometer sensor is available and thus, an inference can be made to find a matching context among the subset of context relating to transportation modes.

Suppose that in a given moment, the collecting module (307) has gathered the following information:
Inertial speed: Higher than 60km/h;
Light sensor: Value detected;
Vibration activity: YES;

All these data are enough to match the underground context. If the measures are taken during daytime the processing module (304) raises the probability of car, underground and train. An algorithm tries to detect the periodic stop/start movements and raises the probability of underground and train over car context. The light sensor value and the time provide more or less probability to be on an underground or on a train.

In some cases, the available sensors may complement one another, corroborating an inference that might have been reached using only a subset of the available sensors. Thus while accelerometer, orientation, and gravitational data may be used alone to distinguish between running and walking - data from a heart rate sensor (if also available) may make the inference more conclusive.

### Reference Number List

- 101: System.
- 102: Wireless network.
- 103: Server of context information
- 104: Third party application.
- 105: Third party user.
- 201: Collected data to be processed.
- 202: Acceleration and orientation data.
- 203: Orientation data relating to slight variation of measures.
- 204: Accelerometer and gravimetric data for establishing a velocity.
- 205: Light intensity data associated with particular environments.
- 206: Acceleration data and time elapsed between movements.
- 207: Acceleration and orientation data relating to pendulum motion.
- 208: Acceleration and orientation data relating to up and down vertical movements.
- 209: Acceleration and gravimetric data relating to sudden value variations.
- 301: Acceleration sensor.
- 302: Orientation sensor.
- 303: Other sensors.
- 304: Processing module.
- 305: Database.
- 306: Communication module.
- 307: Collecting module.
- 308: Gravitional sensor.
- 309: Telecommunication network entity.
- 401: Environment information.
- 402: Determinable contexts.
- 403: Contextual conditions.
- 404: Degree of context matching.
- 405: Active context.

## Claims

1. Method for identifying a context of a person in a telecommunication network **characterised in that** it comprises the steps of:
- periodically collecting environment information (401) comprising measured values of physical variables related to an environment of the person;
- establishing a plurality of determinable contexts (402) by checking presence of a subset of measured values of physical variables for determining each context;
- evaluating, for each determinable context (402), a plurality of contextual conditions (403), each contextual condition (403) based on a comparison of at least one measured value of a physical variable with an expected value of said physical variable for said context and;
- assigning a degree of contextual matching (404) to each determinable context (402) based on the evaluated contextual conditions (403);
- selecting, among the determinable contexts (402), an active context (405) of the person based on the degree of contextual matching (404); and
- communicating the active context (405) of the person with a telecommunication network entity (309).

2. Method according to claim 1, wherein the step of evaluating a plurality of contextual conditions (403) further comprises checking compatibility of the previous active context of the person and previous context conditions related thereto.

3. Method according to any of claims 1 or 2, wherein the step of selecting an active contextual (405) further comprises:
- selecting a secondary context (406) by checking compatibility with the remainder contexts and contextual conditions related thereto; and
- selecting the secondary context among the remainder compatible contexts based on the degree of contextual matching (404).

4. Method according to any of claims 1 to 3 , wherein the environment information (401) comprises orientation, acceleration and gravimetric information related to the environment of the person.

5. Method according to claim 4, wherein the environment information further comprises light intensity information of the environment related to the person.

6. Method according to any of claims 4 or 5, wherein the environment information further comprises sound intensity information related to the environment of the person.

7. Method according to any of claims 4 to 6, wherein the environment information further comprises humidity degree information related to the environment of the person.

8. Method according to any of claims 4 to 7, wherein the environment information further comprises temperature information related to the environment of the person.

9. Method according to any claims of 4 to 8, wherein the environment information further comprises location information of the person according to the cell of the telecommunication network used.

10. Method according to any of claims 4 to 9, wherein the step of evaluating the plurality of contextual conditions further comprises recognising:
- chaotic pattern variation of the orientation;
- vibration movement;
- pendulum movement variation;
- repeatedly stop and star.

11. Method according to any of claims 1 to 10, wherein it further comprises a step of generating a notification associated with the active context of the person.

12. Method according to any of claims 9 to 11, wherein it further comprises:
- selecting among a plurality of active contexts of persons, a subset of persons based on the location information;
- identifying a common context compatible with the active contexts of the selected subset of persons and their contextual conditions.

13. System for identifying a context of a person in a telecommunication network **characterised in that** it comprises:
- a storage module (305) configured to store environment information (401) comprising measured values of physical variables and expected values of each physical variables for each context;
- a processing module (304) configured to establish a plurality of determinable contexts (402) by accessing to the storage module (305) and checking presence of a subset of measured values of physical variables for determining each context; the processing module (304) further configured to evaluate, for each determinable context (402), a plurality of contextual conditions (403), each contextual condition (403) based on a comparison of at least one measured value of a physical variable with an expected value of said physical variable for said context and to assign a degree of contextual matching (404) to each determinable context (402) based on the evaluated context conditions (403); the processing module (304) further configured to select, among the determinable contexts (402), an active context (405) of the person based on the assigned degree of context matching (404); and
- a communication module (306) coupled with the processing module (304) and configured to transmit the active context (405) of the person with a telecommunication network entity (309) and to receive a notification from the entity network (309) based on said active context (405).

14. System according to claim 13, wherein it further comprises a collecting module (307) coupled with the storage module (305) and configured to collect data from a plurality of sensors (303) selected among the following:
- orientation sensor,
- acceleration sensor,
- gravimetric sensor,
- humidity sensor,
- light sensor,
- temperature sensor, and
- sound sensor.

15. System according to any of claims 13 or 14, wherein the communication module (304) is configured to obtain location information from the cell used for communicating in the telecommunication network.
